# EUROPEAN PATENT APPLICATION

(11) **EP 1 737 240 A2**
(43) Date of publication of application: **27.12.2006**
(21) Application number: 05300497.4
(22) Date of filing: 21.06.2005
(51) Int. Cl.: H04N 7/26, H04N 7/36, H04N 7/46, H04N 7/50

(54) **Method for scalable image coding or decoding**

(71) Applicant: Thomson Licensing, 92100 Boulogne-Billancourt (FR)
(72) Inventor: Francois, Edouard, 35890 Bourg des Comptes (FR); Burdin, Nicolas, 35700 RENNES (FR); Lopez, Patrick, 35450 Livré sur Changeon (FR)
(74) Representative: Ruellan-Lemonnier, Brigitte

(57) **Abstract**

The process comprises a step of splitting (9, 22) chroma data of source images to extract chroma data of the lowest resolution corresponding to a first standard and residue data corresponding, when combined to said chroma data of the lowest resolution, to a higher resolution of chroma data of a second standard.

## Description

The invention relates to a scalable video coding/decoding process and more particularly to a scalable coding of the chrominance components of video.

In usual video coding solutions, the video is encoded in a given chrominance format. Hence MPEG-2 MP-ML (Main Profile/Main Level) only treats 4:2:2 YUV formats. MPEG-4 AVC (Advanced Video Codec) Main Profile is designed for encoding 4:2:0 YUV format. MPEG-4 AVC High Profile may address various formats, till 4:4:4 YUV format. Once the video is encoded at a given format, the decoder can only generate a video at this format. Of course, a subsequent format conversion can then be applied, but this process is not necessarily lossless, requires additional computations, and bitrate cost. Considering scalable video coding, solutions proposed in the literature or within the MPEG SVC (Scalable Video Codec) group do not address this issue.

Nowadays, a lot of image formats are available, for example High Definition (HD), Standard Definition (SD), CIF (quarter of SD format), QCIF (quarter CIF). For a given image format, we can have different ratios between luma and chroma samples, for example the 4:4:4 YUV color format where the ratio is 1 or the 4:2:0 YUV color format where the ratio is 4, according to the requested quality of the image. Scalable video coding enables to encode a same content, available in different image formats, in one single encoding process. For example, one single encoding, generating one single bitstream, can be used to encode a content in CIF, SD and HD formats. But the scalable coding of a source image according to different image formats is carried out by keeping a same ratio between chroma and luma samples. Consequently, the chroma quality is not adapted to the displays.

The invention relates to a process for scalable video coding of digital source images made up of chroma and luma data, according to different standards, a standard being defined by an image format which corresponds to a luma resolution and by a chroma format which corresponds to a chroma resolution, characterised in that it comprises a step of splitting chroma data of source images to extract chroma data of the lowest resolution of said standards and residue data corresponding, when combined to said chroma data of the lowest resolution, to a higher resolution of chroma data of said standards.

According to a particular feature, the process comprising a spatial analysis of an image giving luma and chroma frequency data in the frequency domain, the splitting step comprises a selection of chroma frequency data according to their frequency.

According to another particular feature, the image undergoing a spatial analysis is a low frequency or high frequency image obtained through a temporal analysis of the digital source image.

According to another particular feature, the spatial analysis is a Discrete Cosine Transform (DCT) giving blocks of coefficients, the selected frequency data being selected coefficients

According to another particular feature, a chroma block of coefficients is separated into 4 subblocks, the coefficients of the upper left block are selected to give chroma data at the lowest chroma resolution, the coefficients of the block below are selected to give residue data corresponding to a higher horizontal chroma resolution, the coefficients of the right blocks are selected to give residue data corresponding to a higher vertical chroma resolution.

According to another particular feature, the spatial analysis is a Discrete Wavelet Transform (DWT) giving sub-band signals and the selected frequency data are selected sub-bands.

According to another particular feature, the maximum level of decomposition of the spatial analysis, corresponding to the number of obtained sub-bands, depends on the chroma resolutions of the standards, the lowest frequency subband corresponding to the lowest chroma resolution.

According to another particular feature, the splitting step comprises :
- at least a low pass filtering and subsampling from chroma data of the digital source image to give chroma data at the lowest chroma resolution corresponding to a standard,
- an upsampling of said chroma data at the lowest resolution to give reconstructed chroma data at the higher chroma resolution corresponding to a standard,
- a subtraction of said chroma data at the higher resolution from corresponding chroma data at same resolution obtained from the chroma data of the digital source image, to give a residue.

According to another particular feature, a spatial analysis is carried out separately on the chroma data with the lowest resolution and on each of the chroma residue data

According to another particular feature, the image undergoing a spatial analysis is a low frequency or high frequency image obtained through a temporal analysis of the chroma data with the lowest resolution.

According to another particular feature, a temporal analysis is also implemented on the chroma residue data and in that motion information used for the temporal analysis of the chroma data with the lowest resolution picture is used for the temporal analysis of the chroma residue data.

The invention also relates to a bitstream for the transmission of data coded according to above process, characterised in that it comprises a base layer for the chroma data with the lowest resolution and enhancement layers for chroma data with higher resolutions.

According to a particular feature, the bitstream comprises separate base layers and enhancement layers for luma and chroma data, a tag, flag or header in the bitstream differentiating the layers for the luma data and the layers for the chroma data.

The invention also relates to a decoding process for the decoding of data coded according to the above process, characterised in that it comprises a step of selecting chroma residue data and combining chroma data of the lowest resolution to selected chroma residue data for calculating chroma data corresponding to a standard.

The encoding process is performed at the 'highest' considered chroma format, that is, the one that corresponds to the maximum chrominance resolution, in a scalable way, so as the decoder can easily have access to any 'lower' or equivalent chroma format.

Doing so, it is possible to have access, at the decoder side, to different chroma formats without having to use format conversion.

The available resolutions of the chroma components can be chosen independently from the luma components. Such a decorrelation allows adapting the chroma resolution, i.e. the color format to any kind of image format. This gives access to chroma components scalability.

Different chroma formats can be used depending on the image resolution. For example, on small image formats, e.g. CIF, generally distributed on low to medium quality devices and displayed on small devices, as high chroma quality is generally not required, 4:2:0 YUV chroma format will be used. On the contrary, for HD formats, more dedicated to high quality and professional video, better chroma quality such as 4:4:4 YUV chroma format will be appropriate.

The chroma information can be adjusted independently from the luma information, allowing an independent control of each one of these data. Hence, depending on the required picture quality, the resolution of chroma can be adjusted while luma resolution is not modified. For example, a lower bit rate can be obtained by decreasing the resolution of the chroma components rather than reducing at the same time the quality of both luma and chroma components.

Other particular feature and benefit of the invention will become clearly apparent from the following description given by way of non-limiting example, and in light of the appended figures, which represent:
- figure 1, examples of chroma components
- figure 2, a scalable binary data bitstream structure,
- figure 3, a coder according to prior art,
- figure 4, a top-down scalable chroma components coder,
- figure 5, a top-down solution for block transform case,
- figure 6, a top-down solution for wavelet decomposition case,
- figure 7, a down-top scalable chroma components coder,
- figure 8, a chroma splitting process.

Let's consider, for example, a video source with a 4:4:4 YUV format. We want to provide 3 formats at the decoder side, 4:4:4 YUV, 4:2:2 YUV, 4:2:0 YUV.

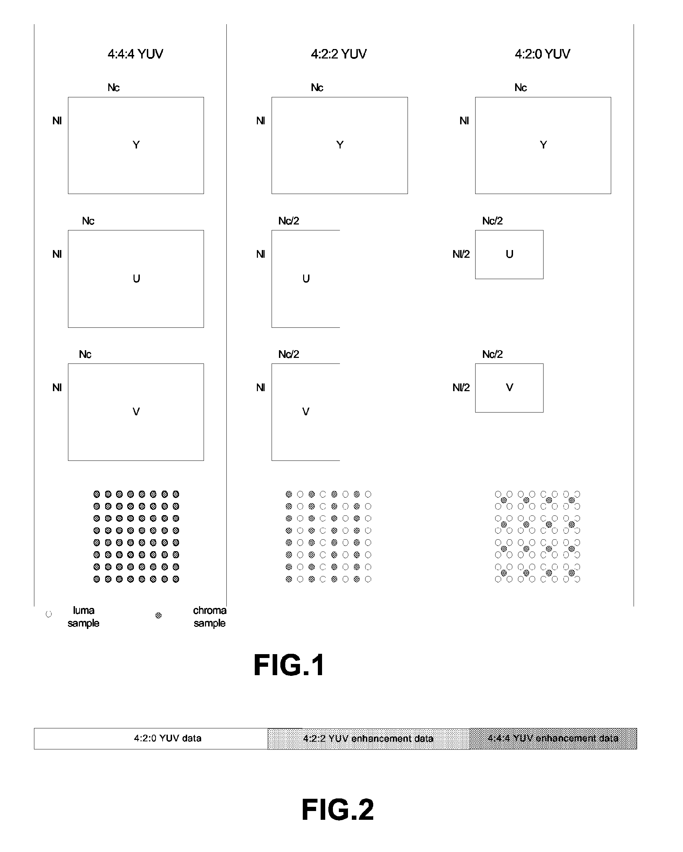

These different formats are illustrated in figure 1.
- In 4:4:4 YUV, the 3 components Y, U and V have same picture size, Nl lines and Nc pixels per line (Nl x Nc pixels).
- In 4:2:2 YUV, U and V components have half the number of pixels per line of Y component (Nl x Nc/2 pixels).
- In 4:2:0 YUV, U and V components have half the number of lines and half the number of pixels per line of Y component (Nl/2 x Nc/2 pixels).

These 3 formats are the most commonly used in video applications.

The process consists in organizing the bitstream resulting from the video coding such as to describe the chroma signal in a scalable way, by separating the data in the bitstream from the lowest chroma resolution to the highest one.

For each frame, as illustrated in figure 2, the binary data, or sub stream, that correspond to this frame, is structured in three sub-sets:
- 1 sub-set containing the binary data related to the YUV 4:2:0 format. The decoding of these binary data provides the decoded picture in YUV 4:2:0 format.
- 1 first enhancement sub-set, containing the binary data related to the YUV 4:2:2 enhancement format. These data, once decoded, can be combined with the decoded data from the 1^{st} sub-set to provide the decoded picture in YUV 4:2:2 format.
- 1 second enhancement sub-set, containing the binary data related to the YUV 4:4:4 enhancement format. These data, once decoded, can be combined with the decoded data from the 1^{st} and 2^{nd} sub-sets to provide the decoded picture in YUV 4:4:4 format.

Each of these sub-sets includes a signalization header, that allows the decoder or the bitstream extractor identifying each of these sets.

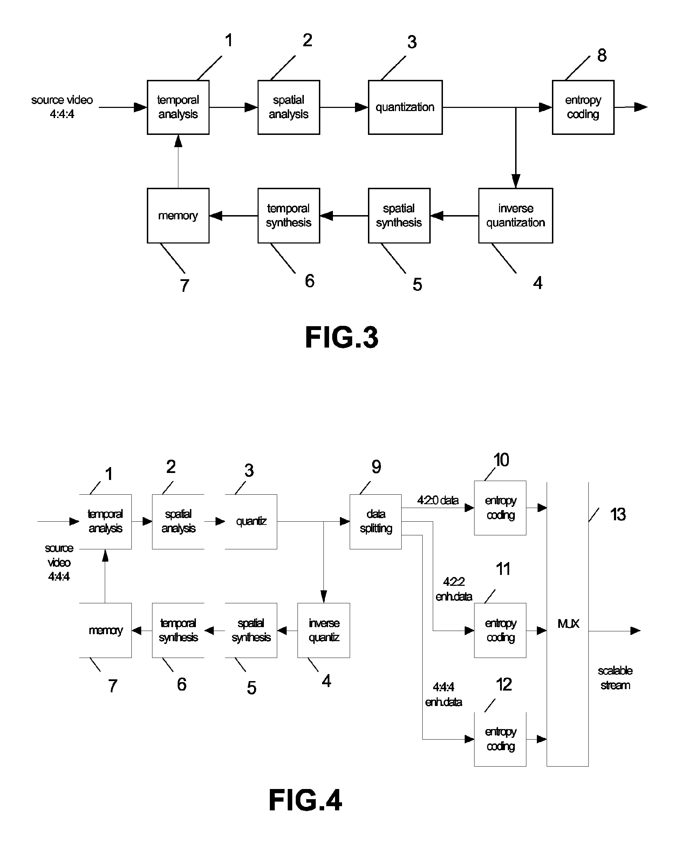

As a reference, figure 3 represents an encoder known from prior art.

First the video is processed through a temporal analysis circuit labeled 1 on the drawing, implementing for example a Motion Compensated Temporal Filtering (MCTF). The resulting output frames, known as temporal low frequency frames and temporal high frequency frames, are then spatially analyzed through a spatial analysis circuit labeled 2. This circuit may implement a spatial prediction step and a spatial transform. This may be for instance a block transform such as Discrete Cosine Transform (DCT) or a wavelet transform. The resulting transformed coefficients are then quantized and encoded using respectively a quantization circuit 3 and an entropy coding circuit 8.

As temporal analysis needs previous images, for example for motion estimation used by the MCTF filtering, reconstructed images are calculated by implementing the inverse of the coding steps. The quantized data at the output of the quantization circuit 3 are successively feeding an inverse quantization circuit 4, a spatial synthesis circuit 5, a temporal synthesis circuit 6 and a memory 7 where reconstructed images are stored in order to be sent to the temporal analysis circuit 1.

The spatial analysis 2 is made on the temporal low frequency frames and temporal high frequency frames with full resolution. In the block transform case (DCT), such spatial analysis gives blocks of coefficients. The coefficients correspond to different spatial frequencies. In the wavelet decomposition case, such spatial analysis gives, among others, spatial low frequency and spatial high frequency sub-bands, that, contrarily to DCT, are not organized in a block-based way.

A first embodiment for generating the chrominance scalable binary data substream structure of one frame is describes in figure 4. In this approach, called top-down solution, the video is directly encoded at the 'higher' chroma format 4:4:4.

Same reference numbers are taken for the circuits similar to the ones described in figure 3.

Source video 4:4:4 going successively through a temporal analysis circuit 1, a spatial analysis circuit 2 and a quantization circuit 3 is sent to a data splitting circuit labeled 9. The quantized data at the output of the quantization circuit 3 are also successively feeding an inverse quantization circuit 4, a spatial synthesis circuit 5, a temporal synthesis circuit 6 and a memory 7 where reconstructed images are stored in order to be sent to the temporal analysis circuit 1.

The data splitting, applied on this 4:4:4 quantized transformed signal, consists in separating from this signal:
- the data corresponding to the 4:2:0 signal only,
- the additional data that, once grouped with the 4:2:0 data, correspond to 4:2:2 data,
- the additional data that, once grouped with the 4:2:2 data, correspond to 4:4:4 data.

The so obtained three quantized signal data sets are outputted on three separate lines, each feeding an entropy coding circuit 10, 11 and 12. The binary data, separately encoded through these entropy coding circuits, are respectly sent to three inputs of a multiplexer 13 to be multiplexed and to provide the output binary data corresponding to the current frame.

The data splitting process is now explained in the block transform decomposition case and in the wavelet decomposition case.

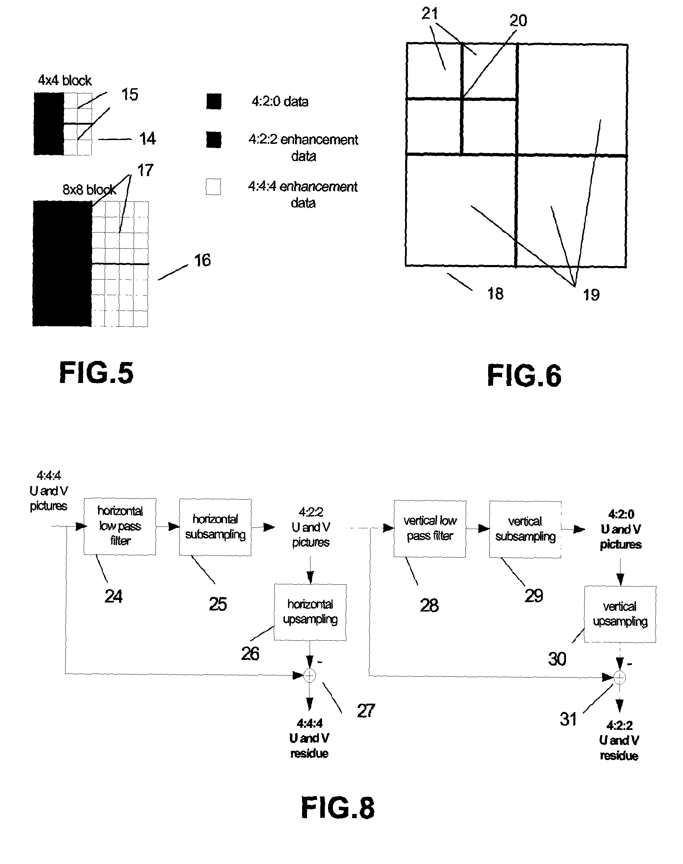

The data splitting process is illustrated figure 5 in examples where the encoder uses 4x4 or 8x8 block transform in the spatial analysis step. The block of coefficients labeled 14 or 16 resulting from the block transform is split in four sub-blocks 15 or 17. As indicated previously, the coefficients inside the DCT block correspond to different spatial frequencies, that actually relates to different spatial resolutions. Hence the upper left sub-block corresponds to the low frequency coefficients and consequently to the chroma samples of the 4:2:0 YUV format. The use of the lower sub-block, as this one contains the coefficients corresponding to the higher horizontal spatial frequencies, allows to get, when combined to the upper left sub-block, the chroma samples of the 4:2:2 YUV format. Adding the remaining sub-blocks gives the chroma samples of the 4:4:4 YUV format.. The upper right block corresponds to the highest vertical frequencies and enriches the 4:2:2 signal in its vertical components. In the same way, the bottom right block corresponds to the highest diagonal frequencies and enriches the 4:2:2 signal in its diagonal components. To get the full 4 :4 :4 signal frequencies, these 2 additional blocks are required.

The U and V components at the upper left side of the block are selected and dispatched on the first output or 4:2:0 data output of the data splitting circuit 9, the components at the lower left side of the block are dispatched on the second output or 4:2:2 enhancement data output, the components at the right side of the block are dispatched on the third output or 4:4:4 enhancement data output.

The data splitting process is illustrated figure 6 in case the encoder uses wavelet decomposition in the spatial analysis step. In the given example, the signal 18 is decomposed into 4 spatial sub-bands 19, 20 and the spatial sub-band of lowest frequency 20 is itself split into four sub-windows 21, giving a total of 7 sub-bands.

The upper left window 20 or LL subband corresponds to the lowest frequencies of the image, obtained through low frequency filtering and subsampling by 2 in the horizontal direction then in the vertical direction, of the original chrominance image and consequently to the chroma samples of the 4:2:0 YUV format. The use of the lower window or LH (Low High) subband corresponding to the high horizontal frequencies allows to get, when combined to the LL subband, the chroma samples of the 4:2:2 YUV format. Adding the remaining HL and HH subbands corresponding to the high vertical frequencies and diagonal frequencies gives the chroma samples of the 4:4:4 YUV format. As in the DCT case, the upper right window corresponds to the highest vertical frequencies and enriches the 4:2:2 signal in its vertical components. In the same way, the bottom right window corresponds to the highest diagonal frequencies and enriches the 4:2:2 signal in its diagonal components. To get the full 4 :4 :4 signal frequencies, these 2 additional windows are required.

The chroma data relating to the LL sub-band are dispatched on the first output 4:2:0 of the data splitting circuit 9, the data relating to the subband LH are dispatched on the second output or 4:2:2 enhancement data output, the data relating to the HL and HH subbands are dispatched on the third output or 4:4:4 enhancement data output.

Of course, additional decomposition stages can be applied, even if only the three chroma formats 4:2:0, 4:2:2 and 4:4:4 are targeted. In such a case, the data of the windows identified above (upper left / bottom left / upper right / bottom right) may be splitted in sub-windows. However, the layered representation that has been described is not modified : a first layer is devoted to the upper left data, the second one to the bottom left data, and the last one to the upper right and bottom right data.

The second level of decomposition allowing to get 7 subbands can also be performed when the formats to be available in the bitstream correspond to a further subsampling of the chroma data. In such a case, the highest level of decomposition must at least correspond to a frequency domain division in as many windows as considered chroma formats. For instance, if 4 different chroma formats are required (e.g. 4:4:4, 4:2:2, 4:2:0, 4:1:1); 2 levels of decomposition, leading to 7 subbands, are required. In case of 3 different required chroma formats, only 1 level of decomposition is necessary.

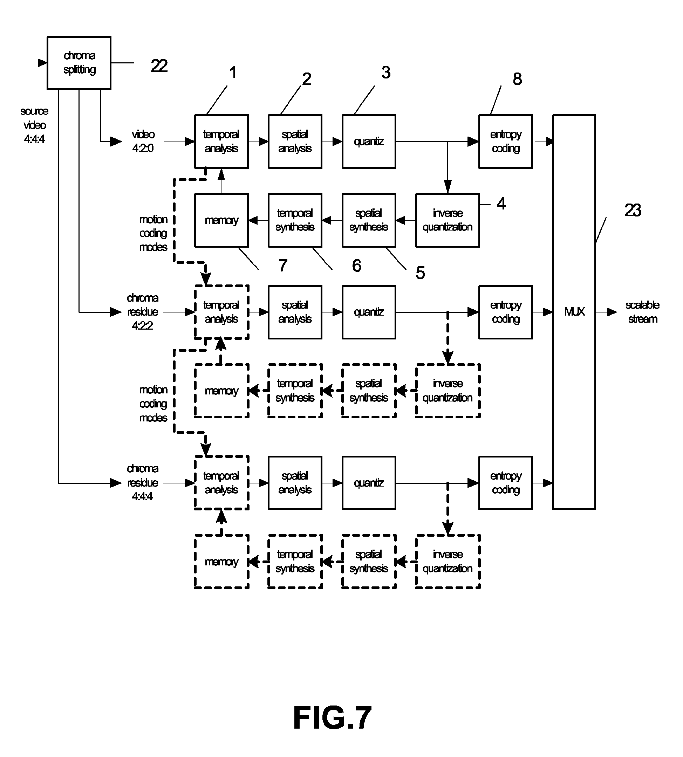

A second embodiment for generating the chrominance scalable binary data substream structure of one frame is described in figure 7. In this approach, called down-top solution, the source 4:4:4 video is first decomposed in three layers using a chroma splitting process described above for the block transform case and the wavelet decomposition case.

In this solution :
- the first layer is the 4:2:0 version of the source video,
- the second layer contains the 4:2:2 residue of chroma components, roughly corresponding to the difference between the 4:2:2 video and the 4:2:0 video,
- the third layer contains the 4:4:4 residue of chroma components, roughly corresponding to the difference between the 4:4:4 video and the 4:2:2 video.

So, the source signal corresponding to the YUV 4:4:4 video at the input of the coder is transmitted to the input of a chroma splitting circuit 22 which ouputs a video 4:2:0, a chroma residue 4:2:2 and a chroma residue 4:4:4 corresponding to the first, second and third layer.

The complete YUV 4:2:0 video is first encoded as the base layer, using a classical encoding technique, for example the one described in figure 3 and corresponding to circuits 1 to 8. A MPEG-4 AVC encoder can be used to encode this YUV 4:2:0 video. This layer corresponds to the base 4:2:0 layer.

The two additional layers are encoded, possibly using information coming from the lower layer. As these layers are residue of U and V components, they contain very few information and would not cost a lot to encode. Consequently a pure intra coding is well adapted for these signals. For instance, a JPEG2000 encoder can be used, or a MPEG-4 AVC encoder with only Intra pictures. In that case, chroma residues 4:2:2 and chroma residues 4:4:4 from the chroma splitting circuit 22 are each directly sent to a spatial analysis circuit 2, a quantization circuit 3 and a entropy coding circuit 8.

Nevertheless, an inter frame coding may anyway be used in a more complex solution, using the motion and coding modes computing for the base layer as illustrated in figure 7, where dot lines correspond to this optional inter layer encoding. A temporal analysis circuit 1 receives the chroma residue data and data from the temporal analysis circuit of the upper layer, data from the quantization circuit 3 are also sent to an inverse quantization circuit 4, a spatial synthesis circuit 5, a temporal synthesis circuit 6 and a memory 7 where reconstructed images are stored in order to be sent to the temporal analysis circuit 1.

The three resulting binary data corresponding to the three layers, at the output of their respective entropy coding circuits 8, are then multiplexed through a multiplexer 23 to provide the output binary data corresponding to the current frame.

The chroma splitting circuit 22 is detailed in figure 8.

Each picture of the U and V components of the 4:4:4 video is sent to a horizontal low pass filter 24. The filtered picture is then transmitted to a horizontal sub-sampling circuit 25 of a factor of 2. This gives the U and V pictures of the 4:2:2 video.

Each picture of the U and V components of the 4:2:2 video is transmitted to a horizontal upsampling circuit 26, inverse process of the downsampling, to get 4:4:4 U and V reconstructed pictures. Each of these 4:4:4 U and V reconstructed pictures is substracted to the corresponding source 4:4:4 chroma picture through a subtractor 27. This gives, at the output of the subtractor, the 4:4:4 U and V residue pictures.

Each of these 4:2:2 chroma pictures is also transmitted to a vertical low pass filter 28, followed by a vertical sub-sampling circuit 29 of a factor of 2. This gives the U and V components of the 4:2:0 video. The Y component of the 4:4:4 video is kept as it is.

Each of the 4:2:0 chroma pictures is transmitted to a vertical upsampling circuit 30, performing the inverse process of the downsampling on these 4:2:0 chroma pictures to get reconstructed 4:2:2 pictures.

Each of these reconstructed 4:2:2 U and V pictures is substracted to the corresponding 4:2:2 chroma pictures through a subtractor 31. This gives, at the output of the subtractor, the 4:2:2 U and V residue pictures.

Layer 0 or base layer corresponds to the resulting 4:2:0 video (Y, U and V).

Layer 1 or 1^{st} enhancement layer corresponds to the resulting 4:2:2 chroma residue (U and V).

Layer 2 or 2^{nd} enhancement layer corresponds to the resulting 4:4:4 chroma residue (U and V).

The components can be processed sequentially or in parallel, needing duplicated circuits.

The invention also relates to a decoding process. The chroma data extracted from the data stream are decoded using the inverse operations of the coding.

For example, considering the solution selecting blocks of coefficients, an Inverse Discrete Cosine Transformation (IDCT) is used. According to the standard to be used, the low frequency block corresponding to the lowest chroma resolution is selected, processed through an Inverse Discrete Cosine Transformation and combined to the residues corresponding to this standard to construct the reconstructed signal at this lowest chroma resolution.

Considering the solution selecting sub-bands, the lowest frequency sub band is processed by an Inverse Discrete Wavelet Transformation and combined to residues corresponding to the standard to get the reconstructed lowest chroma resolution signal.

The invention can use any kind of image formats, for example HDTV, EDTV, SDTV, SIF, CIF or QCIF formats and any kind of color formats, for example 4:4:4 YUV, 4:2:2 YUV, 4:2:0 YUV, 4:1:1 YUV.

It is also possible, without being outside the scope of the invention, to create separate fields for luma and chroma data, in the bitstream, i.e. to get a scalability at a luma level and a scalability at a chroma level, instead of a scalability at an image format level linking the luma and chroma resolutions. A layer corresponds to a luma or chroma component and sub layers in a layer correspond to the different resolutions of the corresponding component.

## Claims

1. Process for scalable coding of digital source images made up of chroma and luma data, according to different standards, a standard being defined by an image format which corresponds to a luma resolution and by a chroma format which corresponds to a chroma resolution, **characterised in that** it comprises a step of splitting (9, 22) chroma data of source images to extract chroma data of the lowest resolution of said standards and residue data corresponding, when combined to said chroma data of the lowest resolution, to a higher resolution of chroma data of said standards.

2. Process according to claim 1, **characterised in that** it comprises a spatial analysis (2) of an image giving luma and chroma frequency data in the frequency domain, **in that** the splitting step (9, 22) comprises a selection of chroma frequency data according to their frequency.

3. Process according to claim 2, **characterised in that** the image undergoing a spatial analysis is a low frequency or high frequency image obtained through a temporal analysis (1) of the digital source image.

4. Process according to claim 2, **characterised in that** the spatial analysis (2) is a Discrete Cosine Transform (DCT) giving blocks of coefficients (14, 15, 16, 17) and **in that** the selected frequency data are selected coefficients

5. Process according to claim 4, **characterised in that** a chroma block of coefficients (14, 16) is separated into 4 subblocks (15, 17), **in that** the coefficients of the upper left block are selected to give chroma data at the lowest chroma resolution, the coefficients of the block below are selected to give residue data corresponding to a higher horizontal chroma resolution, the coefficients of the right blocks are selected to give residue data corresponding to a higher vertical chroma resolution.

6. Process according to claim 1, **characterised in that** the spatial analysis (2) is a Discrete Wavelet Transform (DWT) giving sub-band signals 18, 19, 20, 21) and **in that** the selected frequency data are selected sub-bands.

7. Process according to claim 6, **characterised in that** the maximum level of decomposition of the spatial analysis (2), corresponding to the number of obtained sub-bands (19, 20, 21), depends on the chroma resolutions of the standards, the lowest frequency subband corresponding to the lowest chroma resolution.

8. Process according to claim 1, **characterised in that** the splitting step (9, 22) comprises :
- at least a low pass filtering (24, 28) and subsampling (25, 29) from chroma data of the digital source image to give chroma data at the lowest chroma resolution corresponding to a standard,
- an upsampling (26, 30) of said chroma data at the lowest resolution to give reconstructed chroma data at the higher chroma resolution corresponding to a standard,
- a subtraction (27, 31) of said chroma data at the higher resolution from corresponding chroma data at same resolution obtained from the chroma data of the digital source image, to give a residue.

9. Process according to claim 8, **characterised in that** a spatial analysis (2) is carried out separately on the chroma data with the lowest resolution and on each of the chroma residue data

10. Process according to claim 9, **characterised in that** the image undergoing a spatial analysis is a low frequency or high frequency image obtained through a temporal analysis (1) of the chroma data with the lowest resolution.

11. Process according to claim 10, **characterised in that** a temporal analysis (1) is also implemented on the chroma residue data and **in that** motion information used for the temporal analysis (1) of the chroma data with the lowest resolution picture is used for the temporal analysis (1) of the chroma residue data.

12. Bitstream for the transmission of data coded according to claim 1, **characterised in that** it comprises a base layer for the chroma data with the lowest resolution and enhancement layers for chroma data with higher resolutions.

13. Bitstream according to claim 12, **characterised in that** it comprises separate base layers and enhancement layers for luma and chroma data, a tag, flag or header in the bitstream differentiating the layers for the luma data and the layers for the chroma data.

14. Decoding process for the decoding of data coded according to the process of claim 1, **characterised in that** it comprises a step of selecting chroma residue data and combining chroma data of the lowest resolution to selected chroma residue data for calculating chroma data corresponding to a standard.
